# FASCICULE DE BREVET EUROPEEN

(11) **EP 1 943 458 B1**
(45) Date de publication et mention de la délivrance du brevet: **07.09.2011**
(21) Numéro de dépôt: 06820305.8
(22) Date de dépôt: 18.10.2006
(51) Int. Cl.: F17C 13/12

(54) **DISPOSITIF DE COMMANDE DU REMPLISSAGE ET/OU DU SOUTIRAGE DE FLUIDE ET RESERVOIR COMPORTANT UN TEL DISPOSITIF**
VORRICHTUNG ZUR STEUERUNG EINER FLUIDFÜLLUNG ODER -EXTRAKTION UND TANK MIT EINER SOLCHEN VORRICHTUNG
FLUID FILLING AND/OR EXTRACTION CONTROL DEVICE AND TANK INCLUDING ONE SUCH DEVICE

(30) Priorité: 27.10.2005 FR 0553265
(43) Date de publication de la demande: 16.07.2008
(73) Titulaire: L'AIR LIQUIDE, Société Anonyme pour l'Etude et l'Exploitation des Procédés Georges Claude, 75007 Paris (FR)
(72) Inventeur: DENIS, Arnaud, F-78440 Lainville En Vexin (FR); LIGONESCHE, Renaud, F-95220 Herblay (FR); PISOT, Philippe, F-95290 L'isle Adam (FR)
(74) Mandataire: De Cuenca, Emmanuel Jaime
(86) Numéro de dépôt international: PCT/FR2006/051047
(87) Numéro de publication internationale: WO 2007/048952

(56) Documents cités:
- EP-A- 1 026 438
- FR-A- 2 774 452
- FR-A- 2 793 297
- FR-A- 2 803 366
- US-A- 3 035 605
- US-A- 5 975 121

## Description

La présente invention concerne un dispositif de commande du remplissage et/ou du soutirage de fluide ainsi qu'un ensemble comprenant un réservoir et un tel dispositif. Un example de dispositif de commande du remplissage et/ou du soutirage est divulgué dans le document EP 1 026 438.

L'invention concerne plus particulièrement un dispositif-de-commande du remplissage et/ou du soutirage de fluide à partir notamment d'un réservoir de fluide sous pression comportant un corps ayant une extrémité de connexion pourvue de moyens d'accrochage destinés à coopérer avec des moyens d'accrochages complémentaires, notamment d'une interface de connexion d'un réservoir, un organe d'ouverture de vanne mobile relativement au corps, des moyens d'actionnement aptes à déplacer sélectivement l'organe d'ouverture, les moyens d'actionnement étant mobiles entre une position de marche et une position d'arrêt correspondant respectivement à une position de travail et une position de repos de l'organe d'ouverture, un orifice destiné à accueillir un raccord de sortie ou d'arrivée pour assurer la distribution de fluide depuis ou vers le réservoir.

Un besoin est la diffusion large à un public de non-spécialiste de systèmes nécessitant l'utilisation de gaz. (professionnels tels qu'infirmières, laborantins par exemple ou grand public tels que des bricoleurs, automobilistes,..).

Un objectif des systèmes de stockage de fluide et de leurs dispositifs de remplissage et/ou de soutirage est de rendre faciles les manipulations nécessitées par l'action d'échanger un réservoir plein contre un réservoir vide. Les systèmes de stockage doivent de plus assurer implicitement un niveau de sécurité rendant possible ces manipulations par des non specialistes, tout en permettant d'améliorer la sécurité et la productivité dans des centres de conditionnement.

Un problème à résoudre par ces systèmes est la simplification et la sécurisation d'un dispositif associé à-un raccord de sortie d'un système délivrant du gaz (par exemple sans utilisation d'outil).

Il y a donc nécessité de rendre évidentes les manipulations liées à l'ouverture et la fermeture d'un système délivrant du gaz tout en assurant que la délivrance ne soit effective que quand toutes les conditions de sécurité sont réunies. En effet, ces systèmes doivent pouvoir empêcher la diffusion du gaz dans l'environnement direct de l'utilisateur.

Par ailleurs, un autre problème posé par les systèmes actuels réside dans le fait qu'il arrive que les raccords de sortie soient pollués (par exemple par des salissures ou parce que des insectes y font leur nid).

Un but de la présente invention est de pallier tout ou partie des inconvénients de l'art antérieur relevés ci-dessus.

A cette fin, le dispositif de commande du remplissage et/ou du soutirage de fluide à partir notamment d'un réservoir de fluide sous pression selon l'invention, par ailleurs conforme à la définition générique qu'en donne le préambule ci-dessus, est essentiellement caractérisé en ce qu'il comporte des moyens de verrouillage escamotables des moyens d'actionnement dans la position marche, les moyens de verrouillage escamotables étant conformés de façon à coopérer avec l'orifice, de façon que, lorsque qu'un raccord n'est pas connecté au dispositif de commande dans l'orifice, les moyens de verrouillage sont sollicités vers leur position escamotée, empêchant le maintien stable des moyens d'actionnement dans la position marche.

Par ailleurs, l'invention peut comporter l'une ou plusieurs des caractéristiques suivantes :
- les moyens de verrouillage escamotables sont conformés de façon que, lorsque qu'un raccord est connecté au dispositif de commande dans l'orifice, un témoin de connexion transmet un effort aux moyens de verrouillage de façon à maintenir ces derniers dans une position active de verrouillage des moyens d'actionnement dans la position de marche.
- le dispositif comporte des moyens intermédiaires assurant la transmission de l'effort de maintien aux moyens de verrouillage ; les moyens intermédiaire de transmission comportant un organe mobile comprenant une première extrémité apte à venir coopérer en butée avec un raccord dans l'orifice et une seconde extrémité apte à venir coopérer en butée avec les moyens de verrouillage escamotables.
- lorsque qu'un raccord -est déconnecté et sorti de l'orifice, l'effort de maintien aux moyens de verrouillage est supprimé automatiquement, les moyens de verrouillage étant escamotés pour commuter les moyens d'actionnement dans la position d'arrêt.

- les moyens d'actionnement comportent un interrupteur mobile en translation.
- le dispositif comporte des moyens de rappel sollicitant les moyens de verrouillage vers la position escamotée.
- le dispositif comporte un obturateur apte à être déplacé entre des positions d'ouverture et de fermeture de l'orifice pour le raccord et en ce que l'obturateur constitue l'organe mobile des moyens intermédiaires de transmission de l'effort de maintien aux moyens de verrouillage.
- l'obturateur comporte une portion d'accrochage, en position d'ouverture de l'obturateur, la portion d'accrochage faisant saillie dans l'orifice de façon à permettre sa coopération en accrochage avec une portion conjuguée d'un raccord.
- le dispositif comporte des moyens de fermeture destinés à commander le déplacement de l'organe vers sa position de repos.
- les moyens de verrouillage comportent une portion d'accrochage élastique, la portion d'accrochage élastique et les moyens d'actionnement ayant des formes conjuguées de façon que lorsque les moyens de verrouillage sont en position active de verrouillage, le déplacement des moyens d'actionnement vers la position de marche provoque l'accrochage de la portion élastique et des moyens d'actionnement.
- les moyens de fermeture sont mobiles entre une position inactive et une position active, en position active, les moyens de fermeture coopérant avec les moyens d'actionnement pour déplacer et/ou déformer de la portion d'accrochage élastique et ainsi libérer le verrouillage des moyens d'actionnement.

Un autre but de l'invention est de proposer un ensemble réservoir de fluide sous pression et dispositif de commande le réservoir comprenant une enveloppe délimitant un volume de stockage et pourvu d'un orifice permettant la communication avec l'intérieur du réservoir une tête de remplissage et de distribution disposée au niveau de l'orifice, un organe d'isolement tel qu'une valve, une interface de connexion destinée à coopérer de façon amovible avec un dispositif de commande, le dispositif de commande étant conforme à l'une quelconque des caractéristiques précédentes ou suivantes.

D'autres particularités et avantages apparaîtront à la lecture de la description ci-après, faite en référence aux figures dans lesquelles :
- la figure 1 représente une vue extérieure en perspective isométrique d'un exemple de réalisation d'un réservoir selon l'invention,
- la figure 2 est une vue en coupe longitudinale à plus grande échelle de la partie supérieure du réservoir de la figure 1,
- les figures 3 et 4 sont des vues extérieures en perspective isométrique d'un exemple de réalisation d'une tête de délivrance de fluide selon l'invention avec, à la figure 4, un raccord de sortie connecté,
- la figure 5 est une vue en coupe longitudinale de la tête de délivrance de la figure 4 équipée de son raccord de sortie;
- la figure 6 est une vue en perspective isométrique illustrant l'intérieur de la tête de délivrance sans son raccord de sortie,
- la figure 7 est une vue en coupe longitudinale illustrant l'intérieur de la tête de délivrance sans son raccord de sortie,
- la figure 8 est une vue en coupe longitudinale de la tête de délivrance équipée de son raccord de sortie et en position d'arrêt;
- la figure 9 est une vue en coupe longitudinale de la tête de délivrance équipée de son raccord de sortie en position déverrouillée,
- les figures 10 et 11 représentent des vues respectivement en perspective isométrique en coupe longitudinale de la tête de délivrance équipée de son raccord de sortie et en position de marche,
- la figure 12 est une vue en coupe longitudinale de la tête de délivrance équipée de son raccord de sortie et montée sur un réservoir selon la figure 2.

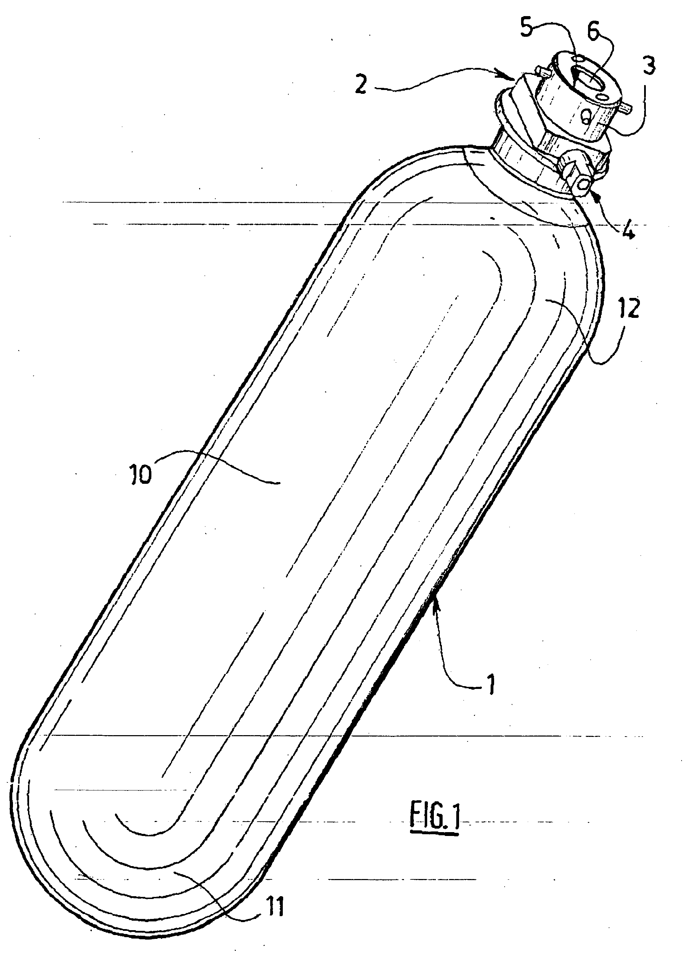

La figure 1 représente un corps de réservoir 1 oblong présentant une partie principale cylindrique 10 et deux extrémités inférieure 11 et supérieure 12 en forme sensiblement de dôme. L'extrémité arrondie supérieure 12 dispose d'une tête 2 de remplissage et de distribution. Comme représenté, la tête 2 de remplissage et de distribution comprend notamment une interface de connexion 3, un témoin d'état de la contenance 4, un bouclier anti-chocs 5 et un orifice central 6 donnant accès à l'intérieur du réservoir 1.

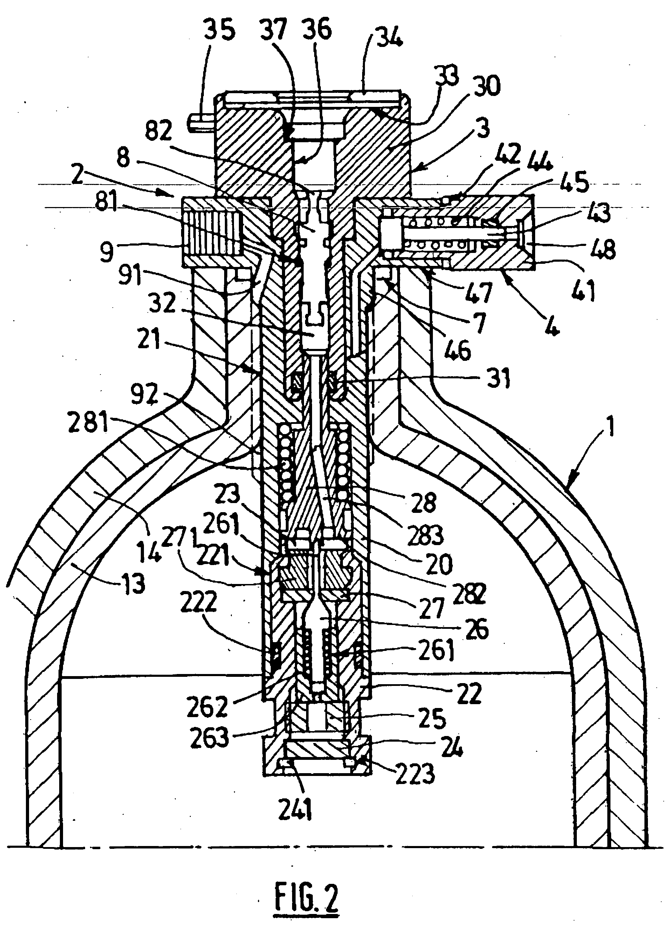

En se référant à présent à la figure 2, le réservoir 1 comporte une enveloppe 13 interne étanche (ou « liner »), par exemple en alliage d'aluminium ou analogue destinée à contenir le fluide et en particulier du gaz sous pression. L'enveloppe 13 est renforcée sur sa surface extérieure par un enroulement de fils 14 de fibres de carbone liées par de la résine époxy ou tout autre moyen analogue.

Une tête 2 de remplissage et de distribution oblongue est disposée dans le réservoir 1, au niveau de l'orifice du réservoir 1, à l'intérieur de l'enveloppe 13.

Le corps 20 de la tête de remplissage et de distribution 2 est lié mécaniquement à l'enveloppe 13 grâce à un filetage 21 coopérant avec un taraudage formé sur l'enveloppe 13. Un joint 7 annulaire est disposé dans une gorge ménagée dans le l'enveloppe 13. La gorge est située à l'extrémité supérieure de l'enveloppe 13 et est refermée par le corps 20 de la tête 2 de remplissage et de distribution, de façon à assurer l'isolation entre le corps 20 et l'intérieur du réservoir 1.

La tête 2 de remplissage et de distribution comprend dans sa partie inférieure une cartouche de pré-détente 22 qui est vissée dans son corps 20 grâce à un système de filetage/taraudage 221.

En aval de la cartouche de pré-détente 22 (vers le haut de la cartouche 2), la tête 2 de remplissage et de distribution comprend une chambre basse pression 23. L'étanchéité entre l'intérieur du réservoir 1 et la chambre basse pression 23 est assurée par l'association 222 d'un joint torique et de bagues anti-extrusion disposés entre la cartouche 22 et le corps 20 de la tête 2.

La cartouche de pré-détente 22 comporte, d'amont en aval (c'est-à-dire de sa partie inférieure vers sa partie supérieure sur la figure 2) un filtre 24, et un clapet 26 de pré-détente. Le filtre 24 est maintenu dans la cartouche 22 par une bague élastique 241 logée dans une gorge 223 formée dans le corps de la cartouche 22.

Le clapet 26 pré-détente est soumis à l'action d'un ressort 261 vers un siège 27 maintenu dans la cartouche 22 sous l'action du porte-siège fileté 271. Le clapet 26 est soumis à l'effort du respect de clapet 261 et à l'effort du gaz sous pression.

L'extrémité supérieure du clapet 26 est munie d'une tige 261 s'étendant vers le haut dont l'extrémité est en contact avec un piston de pré-détente 28. Le piston 28 est soumis quant à lui à une contrainte de la part d'un ressort 281 en direction du clapet 26. Du fait de l'effort du ressort 281 et de l'action du gaz sur la section 282 du piston 28, le clapet 26 assure un rôle de régulation de pression.

Lors des phases de soutirage de gaz à partir du réservoir 1, le gaz contenu dans le réservoir 1 sous haute pression transite en se détendant par la cartouche de pré-détente 22 vers la chambre basse pression 23.

Le gaz détendu traverse ensuite le piston 28 par un perçage 283 formé dans le corps du piston, pour déboucher dans une chambre 32 située dans le corps 30 d'une l'interface de connexion 3. L'interface de connexion est montée au niveau de l'extrémité supérieure de la tête 2.

La chambre 32 comprend une valve d'isolement 8 ayant une étanchéité avec l'intérieur du réservoir assurée par un joint 81 avec le corps 30 de l'interface de connexion 3.

La valve 8 d'isolement est par défaut fermée. La valve 8 d'isolement est par exemple une valve de type classique, telle qu'une valve comportant un corps tubulaire fixe et une bronche mobile à l'intérieur du corps apte à rendre la valve passante ou non suivant la position de la broche.

La valve 8 est susceptible d'être actionnée via un pousse-valve décrit plus en détail ci-après et appartenant à un système receveur de l'ensemble de stockage ou à une tête de distribution du gaz ou à une prise de conditionnement.

L'extrémité supérieure de l'interface de connexion 3 fait saillie à l'extérieur de la tête 2 de remplissage et de distribution et du réservoir 1.

Cette partie extérieure de l'interface de connexion 3 comporte quatre goupilles protubérantes 35 (baïonnettes), positionnées à 90° l'une de l'autre pour permettre l'accrochage d'un système receveur d'un ensemble de stockage ou d'une tête de distribution du gaz ou d'une prise de conditionnement. Bien entendu, cet exemple de réalisation n'est pas limitatif du fait notamment du nombre important de combinaisons de nombres et positions de goupilles envisageables et de possibilités de détrompage (c'est à dire d'identité géométrique) correspondants. De plus, d'autres moyens d'accrochages assurant la même fonction sont envisageables tels qu'une liaison vis / écrou, une genouillère, un verrou escamotable, etc ...

-- La partie extérieure de l'interface de connexion 3 comporte un logement tubulaire formant une zone de réception 36 chargée de recevoir et de guider une extrémité tubulaire conjuguée d'un système receveur ou d'une tête de distribution du gaz ou d'une prise de conditionnement comme décrit ci-après.

L'extrémité tubulaire conjuguée de l'organe de commande destiné à être connecté au réservoir 1 comprend à cet effet et de préférence un joint torique et éventuellement d'une bague anti-extrusion pour assurer la continuité de l'étanchéité entre le dispositif de commande et le réservoir 1.

La partie extérieure de l'interface de connexion 3 comporte de préférence une membrane 33 de protection amovible destinée à éviter l'entrée de particules ou salissures dans la zone de réception 36 pouvant entraîner des dysfonctionnements du système. La membrane 33 est par exemple en polymère à mémoire de forme prédécoupée. La membrane est par exemple maintenue au niveau de l'entrée de la zone de réception 36 par un bouclier anti-chocs 34 en plastique. Bien entendu, toute autre forme de réalisation est envisageable pour protéger l'entrée de la zone de réception, par exemple un opercule à poinçonner, ou un autocollant à ôter.

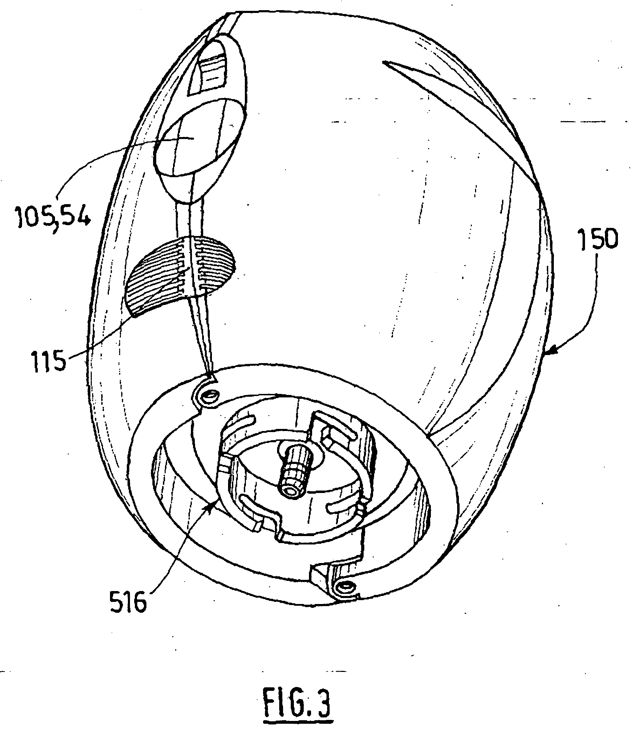

Ainsi, lors de l'introduction de l'extrémité tubulaire d'un dispositif de commande (système receveur ou tête de distribution de gaz ou prise de conditionnement) dans la zone de réception 36, la membrane prédécoupée 33 va s'effacer contre la surface 37 de l'interface de connexion 3. Par exemple, la membrane 33 de protection à mémoire de forme est prédécoupée selon quatre lobes en forme de « pétales ». L'extrémité tubulaire mâle d'un dispositif de commande va repousser les quatre lobes contre la surface 37 de l'interface de connexion 3. Les lobes retrouvent automatiquement leur place originelle (figure 3) lors de l'extraction de cette même extrémité tubulaire.

Le réservoir 1 comporte un témoin d'état 4 comprenant un corps 41 vissé dans le corps 20 du dispositif de la tête 2 de remplissage et de distribution au moyen d'un système à filetage 47. L'étanchéité entre le témoin d'état et la tête 2 de remplissage est assurée au moyen d'un joint métallique contraint 42. Un axe 43 mobile est guidé dans le corps 41 du témoin d'état 4. L'étanchéité entre l'axe 43 et le corps 41 étant réalisée par l'association 45 d'un joint torique et d'une bague anti-extrusion.

L'axe 43 du témoin d'état 4 est soumis aux efforts antagonistes d'un ressort de rappel 44 et de la pression du gaz contenu dans le réservoir 1 acheminé dans le témoin 4 via un filetage 21 et des perçages 46.

Lorsque l'action de la pression du gaz est supérieure à l'effort du ressort de rappel 44, l'extrémité de l'axe 43 apparaît dans une chambre de visualisation 48 formée dans le corps 41 du témoin d'état 4. De cette façon, le témoin d'état indique que le stockage de gaz est plein (pression du gaz contenu dans le réservoir 1 optimale). Dans le cas contraire, l'extrémité de l'axe 43 n'apparaît pas dans une chambre de visualisation 48, ce qui indique que le stockage de gaz n'est pas plein (la pression du gaz contenu dans le réservoir 1 est inférieure à la pression optimale).

Un dispositif de sécurité (de type fusible thermique et/ou soupape de décharge, disque de rupture, etc....) peut équiper le réservoir 1 via un port 9 ménagé dans le corps 20 de la tête 2 de remplissage et de distribution. Ce dispositif de sécurité peut être alimenté par le gaz contenu dans le réservoir 1 via une saignée 92 usinée dans le filetage 21 et via des perçages 91.

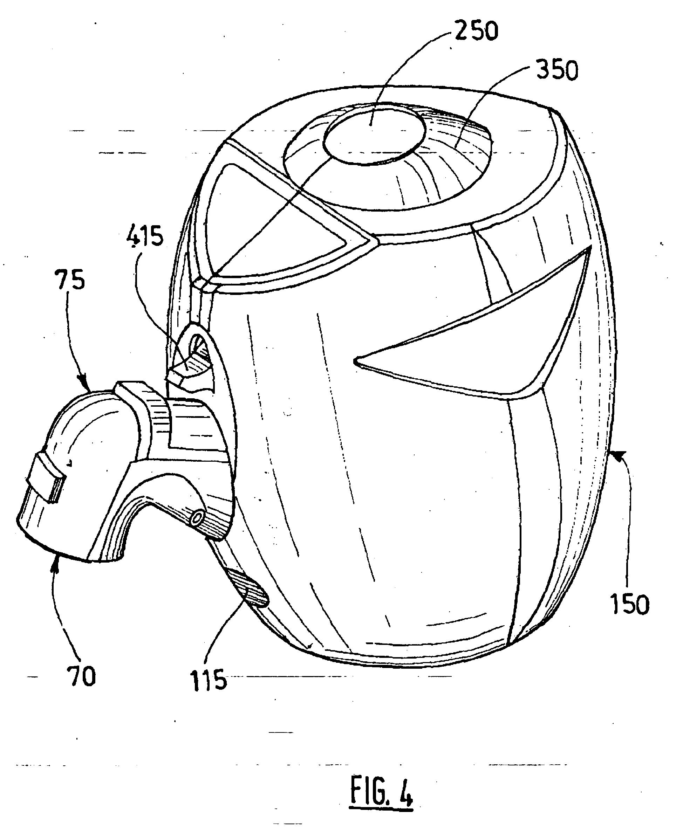

Les figures 3 et 4 illustrent une tête amovible de délivrance du gaz 150 comportant une commande d'ouverture du débit de gaz 250, un bouton annulaire de fermeture du débit de gaz 350, un accès 105 au raccordement de sortie naturellement obturé par un volet 54 évitant les pollutions et une interface de connexion 516. La tête 150 de délivrance du gaz comporte également des persiennes d'évacuation 115 de soupapes de décharge moyenne et basse pressions.

La figure 4 illustre la tête 150 de délivrance du gaz équipée d'un raccord de sortie 75 dont l'orifice 70 est lié à un flexible d'alimentation de fluide (non représenté). Le raccord est destiné à être connecté de manière amovible dans un orifice 105 de la tête de délivrance.

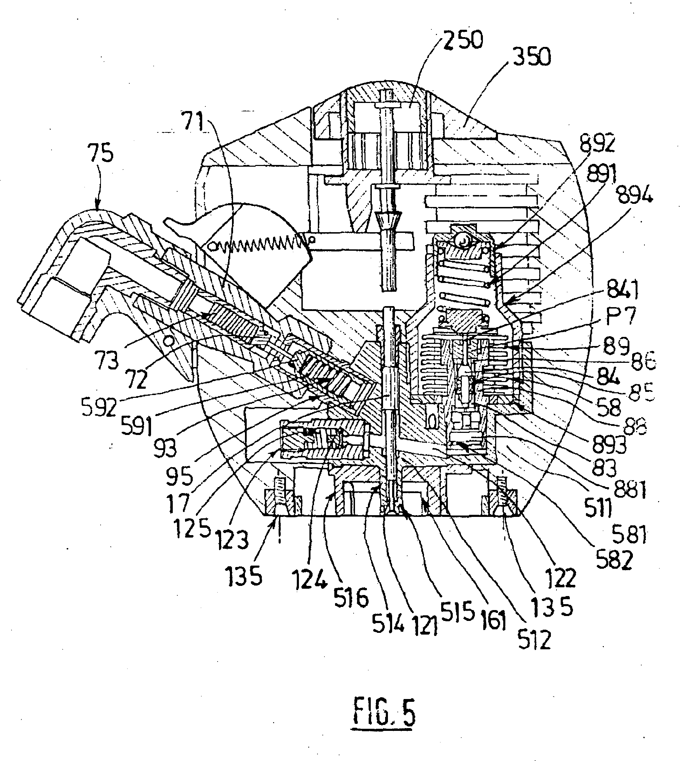

La figure 5 représente le détail de la tête de délivrance du gaz suivant le même mode de réalisation. Le carter de protection de la tête de délivrance 150 est -constitué de deux demi-coquilles 511 liées entre elles par des clips et deux vis 135. La tête de délivrance 150 contient d'une part un corps 512 comprenant les différents organes actifs de délivrance du gaz et d'autre part les commandes d'interface avec l'utilisateur. En particulier, La tête de délivrance 150 comprend une commande d'ouverture du débit de gaz 250, un bouton annulaire de fermeture du débit de gaz 350, un accès 105 au raccordement de sortie 75.

La partie basse du corps 512 est terminée par une extrémité tubulaire 514 ayant un joint torique 515 et une pièce de révolution 516 ayant ici quatre fraisures 161 positionnées à 90°. Bien entendu, l'invention ne se limite pas à cette configuration et toute autre combinaison de nombres et positions de fraisures peut être envisagée.

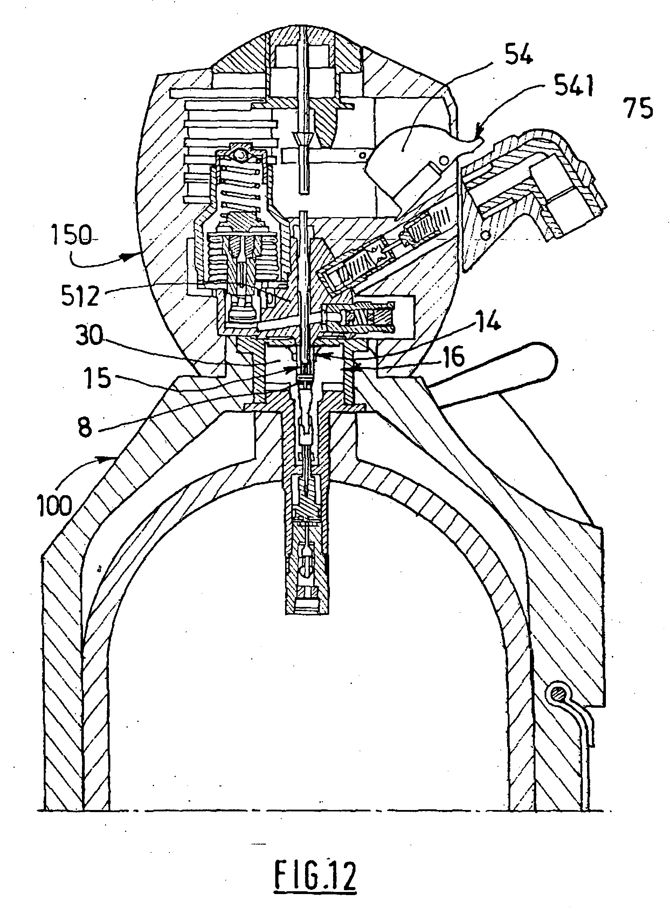

La partie basse du corps 512 forme une interface de connexion pouvant coopérer et se lier avec l'interface de raccordement d'un réservoir 1 tel que décrit ci-dessus, comme illustré à la figure 12. Selon la figure 12, la tête de délivrance du gaz 150 accoste et prolonge un fourreau de protection 100 du réservoir 1.

Le corps 512 est traversé par un pousse-valve 17 ayant une étanchéité dynamique avec ledit corps 512 grâce à un joint torique. L'extrémité supérieure du pousse-valve 17 vient en contact avec la surface de l'axe de la commande d'ouverture du débit de gaz 250 lorsque cette dernière est appuyée et verrouillée.

L'axe de la commande d'ouverture du débit de gaz 250 peut ainsi transmettre un mouvement de translation au pousse-valve 17 qui lui-même reporte ce mouvement de translation sur la tige de valve 8 du réservoir 1 décrit ci-dessus. Le pousse-valve 17 fait alors saillie au-delà de la partie basse du corps 512 pour pénétrer au sein de la tête 2 du réservoir 1, pour réaliser l'ouverture du débit de gaz.

Le fluide stocké dans le réservoir 1 entre alors dans le corps 512 par l'orifice annulaire 121. L'orifice annulaire 121 alimente simultanément, via le perçage transverse 122, une soupape de sécurité moyenne pression 123 et un étage de détente 58. L'étage de détente 58 comprend un mécanisme enfermé dans une cartouche 88 qui est vissée dans le corps 512 et étanche avec celui-ci grâce à un joint torique.

La soupape de sécurité moyenne pression 123 comprend un clapet de décharge 124 dont l'ouverture est déterminée par l'effort de tarage d'un ressort 125. La soupape de sécurité moyenne pression 123 est conformée pour laisser évacuer le surplus de pression par les persiennes 115 ménagées dans les deux demi-coquilles 511.

L'entrée du gaz dans l'etage de détente 58 se fait par la traversée d'un filtre 881 maintenu par une bague élastique 582 prisonnière d'une gorge ménagée dans le corps 512. L'entrée du gaz dans l'étage de détente 58 est réalisée également par le passage autour d'une entretoise 83 permettant une arrivée radiale et homogène du fluide sur un clapet de détente 84.

Du fait de l'effort d'un ressort de clapet 85 et l'action du gaz, le clapet de détente 84 coopère avec un siège 86. Le siège 86 est maintenu dans la cartouche 88 sous l'action d'un porte siège fileté P7. le clapet de détente 84 est muni d'une tige 841 s'étendant vers le haut dont l'extrémité est en contact avec un soufflet métallique 89. Le soufflet métallique 89 est maintenu de façon étanche dans le corps 512 sous l'action combinée d'un capot vissé 894 et d'un joint torique 893. Le clapet 84 est soumis à l'effort d'un ressort de détente 891 précontraint par une vis de détente 892 et à l'effort du gaz sur la section du soufflet métallique 89. De cette façon, le clapet de détente 84 assure une régulation de pression.

Avantageusement, la vis de détente 892 est réglable pour permettre à l'utilisateur de faire varier l'effort du ressort et donc la régulation de pression.

Un perçage (non représenté) formé dans le corps 512 peut assurer le transit du gaz détendu depuis l'intérieur du soufflet métallique 89 vers une connexion de sortie 95. En parallèle, ce perçage ménagé dans le corps 512 peut assure le transit du gaz détendu entre le soufflet métallique 89 et une soupape de décharge basse pression (non représentée et par exemple du même type que la soupape 123 décrite ci-dessus). Les consignes d'ouverture des deux soupapes de décharge peuvent être choisies en adéquation avec les besoins de l'application.

Une connexion de sortie 95 est vissé de façon étanche dans le corps 512. Cette connexion de sortie mâle comprend une jupe 591 enfermant un obturateur 592 qui est par défaut fermé et étanche avec ladite jupe 591 par l'action d'un ressort 93. L'obturateur 592 prévient d'une part l'entrée de particules et de salissures dans le circuit de gaz lorsque le raccord de sortie 75 n'est pas connecté. De plus l'obturateur 592 empêche un débit de fluide à l'atmosphère en cas soit d'une action forcée sur la commande d'ouverture 250 alors que le raccord de sortie 75 n'est pas connecté, soit en cas de déconnexion du raccord de sortie 75.

Le raccord de sortie 75 est composé d'un corps 71 enfermant un obturateur 72. L'obturateur 72 est soumis à l'action d'un ressort 73 de façon à être fermé par défaut et étanche avec ledit corps 71.

Cet obturateur 72 prévient d'une part l'entrée de particules et de salissures dans le circuit de gaz lorsque le raccord de sortie 75 n'est pas connecté et empêche d'autre part la purge à l'atmosphère du fluide contenu dans le tuyau d'alimentation de l'application en cas de déconnexion dudit raccord de sortie 75. Lorsque le raccord de sortie 75 est connecté sur la connexion de sortie mâle 95, d'une part le circuit devient étanche sous l'action d'un joint torique et d'autre part le circuit s'ouvre grâce aux actions mutuelles des deux obturateurs 72 et 592.

Avantageusement selon l'invention, et comme décrit plus en détail ci-après, la tête 150 peut être conformée de façon que :
- si le raccord de sortie 75 n'est pas connecté dans l'orifice 105, le verrouillage de la commande d'ouverture du débit de gaz 250 est impossible,
- si le raccord de sortie 75 est connecté sur la tête 150 amovible de délivrance du gaz dans l'orifice 105, le verrouillage de la commande d'ouverture du débit de gaz 250 est autorisé, l'arrêt de débit de gaz est commandé par une action sur le bouton annulaire 350 et la commande 541 de déverrouillage du raccord de sortie 75 est accessible,
- si le raccord de sortie 75 est déconnecté subitement alors que la commande d'ouverture du gaz est active, cette dernière disjoncte instantanément.

L'orifice 105 de la tête 150 comprend en son sein un dispositif de connexion 95 mâle destiné à coopérer avec un dispositif de connexion complémentaire porté par un raccord 75. Lors de l'actionnement du bouton de mise en marche 250, le pousse-valve 17 d'ouverture du gaz de l'appareil est activé mais la présence au niveau du dispositif de connexion 95 mâle d'un obturateur 54 interdit tout débit de gaz.

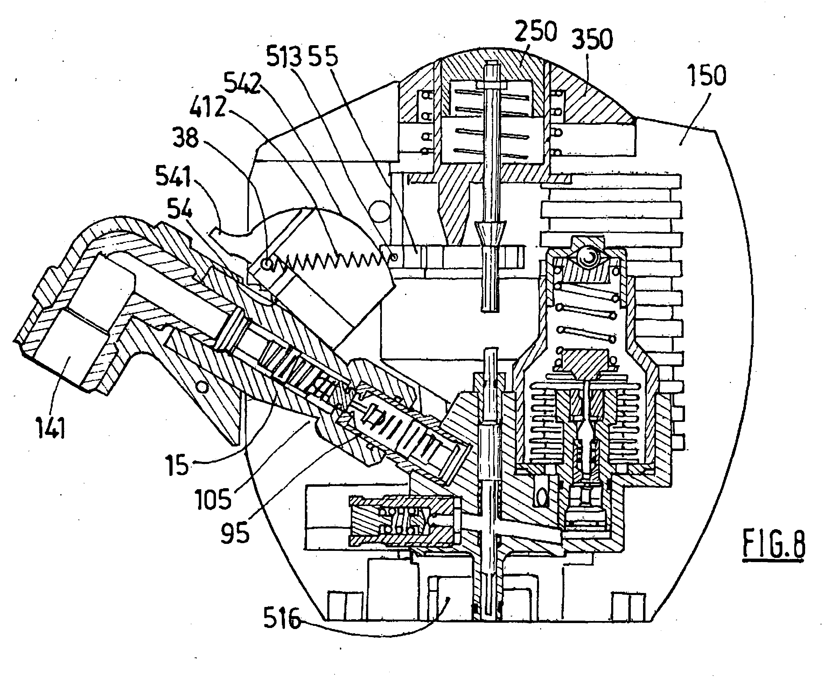

La figure 8 présente le détail de la tête 150 de délivrance du gaz suivant le même mode de réalisation et du dispositif marche-arrêt équipé de son raccord de sortie 75. Lors de la connexion, le raccord de sortie 75 fait tourner un volet d'obturation 54 par rapport à un axe 38 solidaire du corps 150.

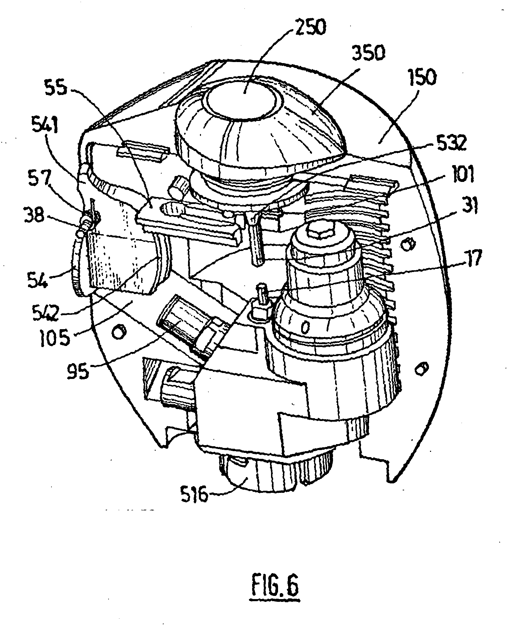

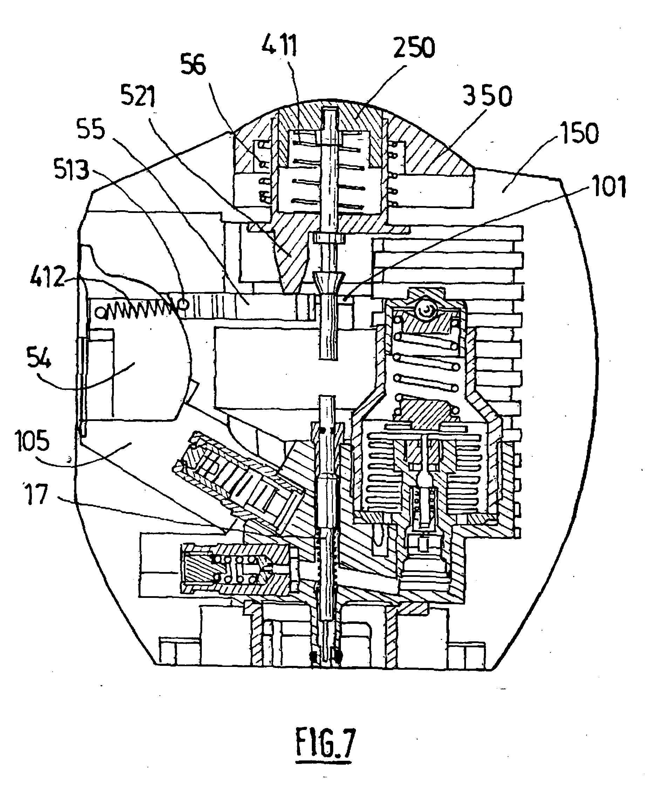

Pendant la rotation du volet 54, le profil came 542 du volet 54 vient pousser une fourchette 55. La fourchette 55 est guidée en translation par rapport au corps 150 au moyen d'une rainure 101 (cf. figure 6 et 7).

La fourchette de verrouillage 55 est maintenue en contact sur le profil de came 542 par un ressort de traction 412. Ce ressort de traction 412 est accroché d'une part sur l'axe 38 de rotation du volet 54 et, d'autre part, sur un axe 513 solidaire de la fourchette 55. Le système de délivrance de fluide peut être mis en marche et verrouillé.

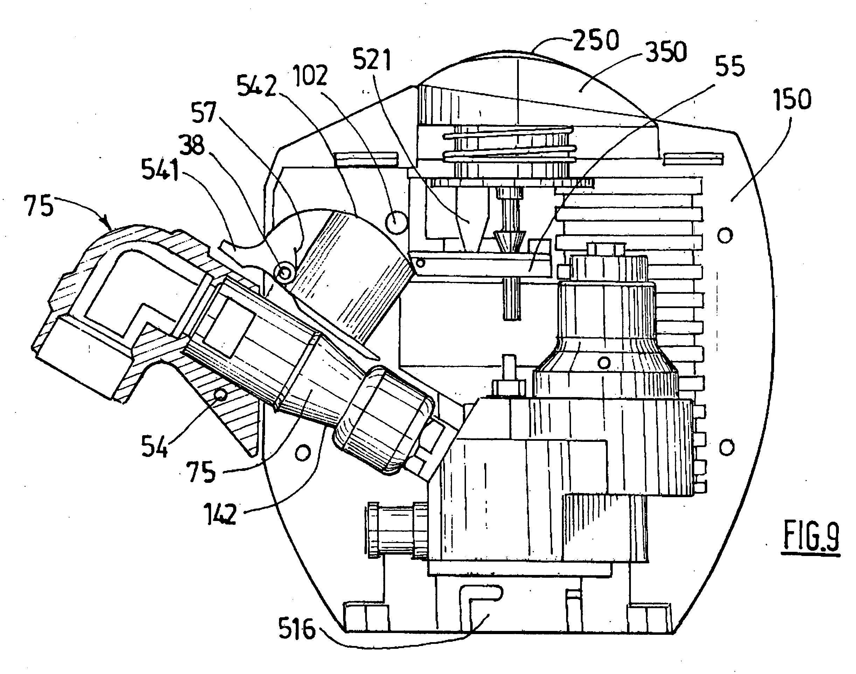

La figure 9 présente le détail de la tête 150 de délivrance du gaz suivant le même mode de réalisation et du dispositif marche-arrêt équipée de son raccord de sortie 75 en position déverrouillé pour déconnexion.

Le volet 54 présente une portion formant une gâchette de déverrouillage 541 accessible depuis l'extérieur. L'action maintenue sur la gâchette 541 de déverrouillage force l'ouverture du volet d'obturation 54 en rotation autour de l'axe 38 jusqu'à mettre en butée le profil came 542 sur une portée 102 du corps 150. Le volet 54 sort ainsi d'un logement 142 conjugué formé sur la surface extérieure du raccord. Le raccord de sortie 75 est ainsi déverrouillé et peut être déconnecté.

Dès l'extraction du raccord de sortie 75 et l'action relâchée sur la gâchette de déverrouillage 541, le volet d'obturation 54 se referme par l'action d'un ressort angulaire 57 (cf. figures 6 et 9). Le volet d'obturation 54 entraîne alors la fourchette de verrouillage 55 est dans la position arrêt du dispositif. Ceci est obtenu par le fait que la fourchette de verrouillage 55 maintenue en contact sur le profil came 542 via le ressort de traction 412.

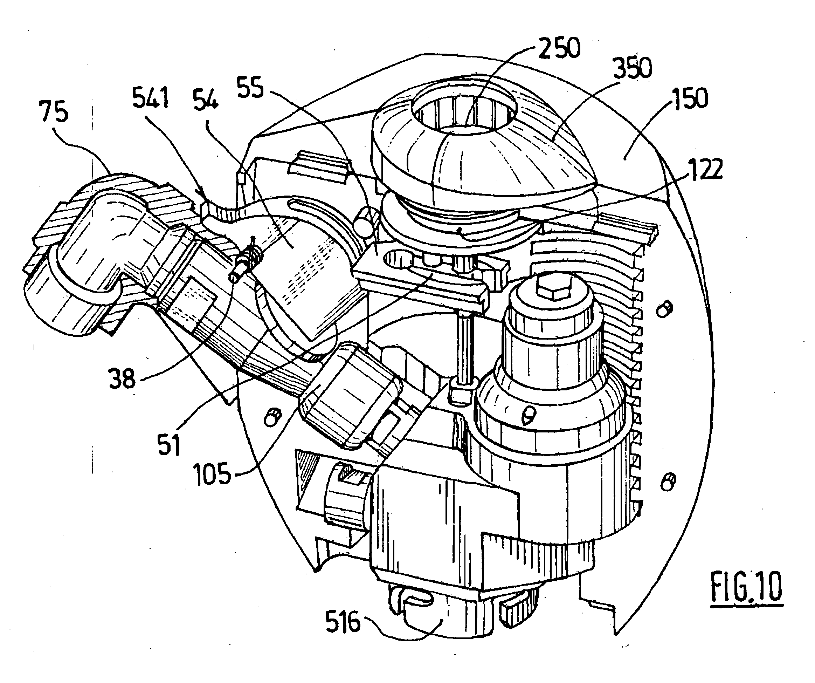

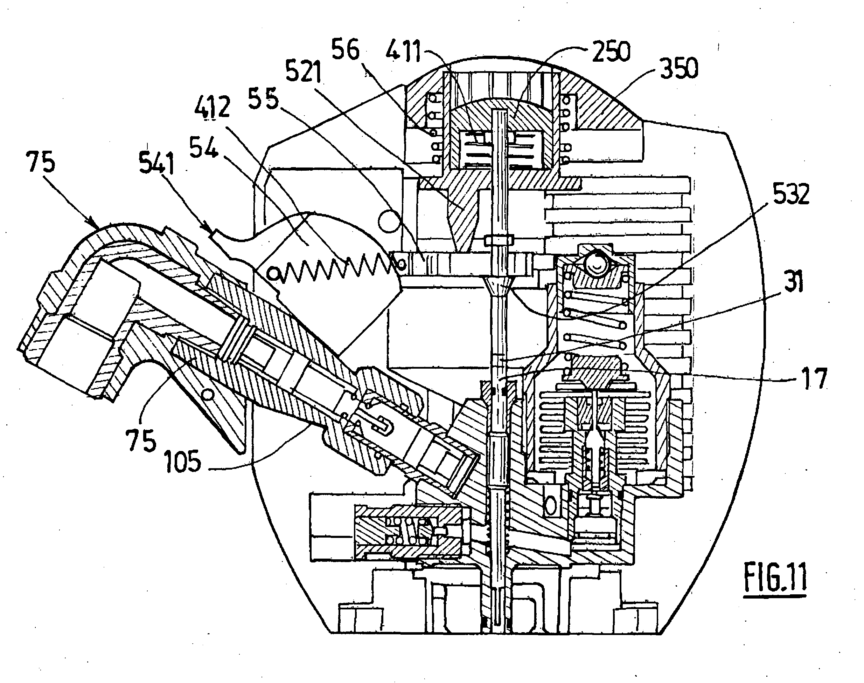

Les figures 10 et 11 illustrent le détail de la tête 150 de délivrance du gaz suivant le même mode de réalisation et du dispositif marche/arrêt équipé de son raccord de sortie 75.

Différentes situations d'utilisation du dispositif sont décrites ci-dessous.

### Fonction marche:

La fourchette de verrouillage 55 est indexée en position de mise en marche du système (cf. connexion du raccord de sortie 75 en figure 8). Le bouton de mise en marche 250 comprend une tige pourvue d'un cône 532 (figure 11). Lors d'une action sur le bouton de mise en marche 250,le cône 532 solidaire de la tige vient écarter deux lames élastiques 51 formant la corps de la fourchette de verrouillage 55 (figure 10). Le cône 532 solidaire de la tige écarte les deux lames élastiques 51 jusqu'à les dépasser complètement.

L'action exercée sur le bouton 250 peut être stoppée dès son arrivée en butée. Le cône 532 passé, les lames élastiques 51 reprennent leur formes initiales et maintiennent la tige au niveau de la base du cône 532. L'extrémité de la tige 31 du bouton 250 de mise en marche maintient alors la positon enfoncée sur le pousse-valve 17.

### Fonction arrêt :

Le bouton annulaire d'arrêt 350 comprend un cône 521 apte à écarter les lames élastiques 51 de la fourchette (figure 11). En appliquant une pression déterminée sur le bouton annulaire d'arrêt 350, le cône 521 d'arrêt vient forcer l'écartement des lames élastiques 51 libérant le cône 532 de mise en marche.

Le ressort 411 maintenu jusqu'ici en compression peut repositionner alors le bouton 250 de mise en marche en position d'arrêt.

Dans l'exemple représenté, l'axe du cône 521 d'arrêt est décalé transversalement du cône 532 de mise en marche. Bien entendu, en variante, le cône 521 d'arrêt pourrait être coaxial au cône 532 de mise en marche.

La pression exercée sur le bouton annulaire d'arrêt 350 peut alors être stoppée. Un ressort 56 coopérant avec le bouton annulaire d'arrêt 350 vient repositionner ce dernier en position relâchée. Deux méplats 122 peuvent être ménagés sur le bouton 350 d'arrêt pour son montage et en particulier pour son indexage et celui du cône 521.

Dans cette configuration le système est arrêté mais toujours connecté via le raccord de sortie 75. Le système peut être de nouveau mis en marche comme précédemment expliqué ou le raccord 75 de sortie peut-être déconnecté de l'orifice 105 comme décrit dans le paragraphe relatif à la figure 9.

### Fonction d'arrêt d'urgence:

Si le raccord de sortie 75 est déconnecté subitement alors que la commande d'ouverture du gaz est active, la fourchette de verrouillage 55 va reprendre sa position non active. De cette façon, le cône 532 est libéré. Le ressort 411 maintenu jusqu'alors en compression va repositionner le bouton de mise en marche 250 en position relevée d'arrêt (cf. paragraphe relatif à la figure 9).

L'invention permet ainsi de gérer les conditions d'autorisation de délivrance du gaz d'un dispositif de délivrance de gaz. L'invention permet également une protection l'orifice de sortie du dispositif de délivrance.

Le système selon l'invention forme ainsi un disjoncteur dans lequel le bouton 250 de mise en marche (c'est-à-dire autorisant la délivrance du gaz) ne peut rester enclenché que si les conditions de -connexion-sont -respectées. Ce bouton de mise en marche 250 disjoncte si ces conditions de connexion ne sont plus respectées.

Dans la solution proposée, la protection du raccord de sortie est conçue de sorte qu'elle donne également l'information d'état connecté ou non.

L'invention, peut concerner toutes les applications demandant un haut niveau de sécurité, une grande facilité d'emploi, une bonne visibilité de l'état du système, un bon compromis légèreté. A titre d'exemple, l'invention peut s'appliquer au stockage et à la distribution d'hydrogène pour pile à combustible portable ou mobile, de gaz médicaux, de gaz pour analyses et laboratoires.

## Revendications

1. Dispositif de commande du remplissage et/ou du soutirage de fluide à partir notamment d'un réservoir de fluide sous pression comportant un corps ayant une extrémité (516) de connexion pourvue de moyens d'accrochage destinés à coopérer avec des moyens d'accrochages complémentaires, notamment d'une interface de connexion d'un réservoir, un organe (17) d'ouverture de vanne mobile relativement au corps, des moyens (250) d'actionnement aptes à déplacer sélectivement l'organe (17) d'ouverture, les moyens (250) d'actionnement étant mobiles entre une position de marche et une position d'arrêt correspondant respectivement à une position de travail et une position de repos de l'organe (17) d'ouverture, un orifice (105) destiné à accueillir un raccord (75) amovible de sortie ou d'arrivée pour assurer la -distribution de fluide, **caractérisé en ce qu'**il comporte des moyens (55) de verrouillage escamotables des moyens (250) d'actionnement dans la position marche, les moyens (55) de verrouillage escamotables étant conformés de façon à coopérer avec l'orifice (105), de façon que, lorsque qu'un raccord (75) n'est pas connecté au dispositif de commande dans l'orifice, les moyens (55) de verrouillage sont sollicités vers leur position escamotée, empêchant le maintien stable des moyens (250) d'actionnement dans la position marche.

2. Dispositif de commande selon la revendication 1, **caractérisé en ce que** les moyens (55) de verrouillage escamotables sont conformés de façon que, lorsque qu'un raccord (75) est connecté au dispositif de commande dans l'orifice, un témoin de connexion (54) transmet un effort aux moyens (55) de verrouillage de façon à maintenir ces derniers dans une position active de verrouillage des moyens (250) d'actionnement dans la position de marche.

3. Dispositif de commande selon la revendication 2, **caractérisé en ce qu'**il comporte des moyens (54, 542) -intermédiaires assurant la transmission de l'effort de maintien aux moyens (55) de verrouillage ; les moyens (54, 542) intermédiaire de transmission comportant un organe (54) mobile comprenant une première extrémité apte à venir coopérer en butée avec un raccord (75) dans l'orifice (105) et une seconde extrémité (542) apte à venir coopérer en butée avec les moyens (55) de verrouillage escamotables.

4. Dispositif de commande selon la revendication 2 ou 3, **caractérisé en ce que** lorsque qu'un raccord (75) est déconnecté et sorti de l'orifice, l'effort de maintien aux moyens (55) de verrouillage est supprimé automatiquement, les moyens (55) de verrouillage étant escamotés pour commuter les moyens (250) d'actionnement dans la position d'arrêt.

5. Dispositif de commande selon l'une quelconque des revendications précédentes, **caractérisé en ce que** les moyens (250) d'actionnement comportent un interrupteur mobile en translation.

6. Dispositif de commande selon l'une quelconque des revendications précédentes, **caractérisé en ce qu'**il comporte des moyens (412) de rappel sollicitant les moyens (55) de verrouillage vers la position escamotée.

7. Dispositif de commande selon la revendication 3, **caractérisé en ce qu'**il comporte un obturateur (54) apte à être déplacé entre des positions d'ouverture et de fermeture de l'orifice (105) pour le raccord et **en ce que** l'obturateur (54) constitue l'organe mobile des moyens (54, 542) intermédiaires de transmission de l'effort de maintien aux moyens de verrouillage.

8. Dispositif de commande selon la revendication 7, **caractérisé en ce que** l'obturateur (54) comporte une portion d'accrochage, en position d'ouverture de l'obturateur (54), la portion d'accrochage faisant saillie dans l'orifice de façon à permettre sa coopération en accrochage avec une portion conjuguée d'un raccord (75).

9. Dispositif de commande selon l'une quelconque des revendications précédentes, **caractérisé en ce qu'**il comporte des moyens (350) de fermeture destinés à commander le déplacement de l'organe (17) vers sa position de repos.

10. Dispositif de commande selon l'une quelconque des revendications 2 à 4, **caractérisé en ce que** les moyens (55) de verrouillage comportent une portion d'accrochage (51) élastique, la portion (51) d'accrochage élastique et les moyens (250) d'actionnement ayant des formes conjuguées de façon que lorsque les moyens (55) de verrouillage sont en position active de verrouillage, le déplacement des moyens (250) d'actionnement vers la position de marche provoque l'accrochage de la portion (51) élastique et des moyens (250) d'actionnement.

11. Dispositif de commande selon les revendications 9 et 10, **caractérisé en ce que** les moyens (350) de fermeture sont mobiles entre une position inactive et une position active, en position active, les moyens (350) de fermeture coopérant avec les moyens (250) d'actionnement pour déplacer et/ou déformer de la portion (51) d'accrochage élastique et ainsi libérer le verrouillage des moyens (250) d'actionnement.

12. Ensemble réservoir de fluide sous pression et dispositif de commande, le réservoir (1) comprenant une enveloppe (13) délimitant un volume de stockage et pourvu d'un orifice permettant la communication avec l'intérieur du réservoir, une tête (2) de remplissage et de distribution disposée au niveau de l'orifice, un organe (8) d'isolement tel qu'une valve, une interface (3) de connexion destinée à coopérer de façon amovible avec un dispositif de commande, **caractérisé en ce que** le dispositif de commande est conforme à l'une quelconque des revendications précédentes.

## Claims

1. Device for controlling the filling and/or the extraction of fluid particularly from a tank of pressurized fluid comprising a body having a connection end (516) provided with attachment means intended to collaborate with complementary attachment means, particularly of a tank connection interface, a member (17) for opening a valve that can move relative to the body, actuating means (250) capable selectively of moving the opening member (17), the actuating means (250) being able to move between an on position and an off position which correspond respectively to a work position and a rest position of the opening member (17), an orifice (105) intended to accommodate a removable inlet or outlet coupling (75) for distributing fluid, **characterized in that** it comprises retractable means (55) of locking the actuating means (250) in the on position, the retractable locking means (55) being configured in such a way as to collaborate with the orifice (105) in such a way that when a coupling (75) is not connected to the control device in the orifice, the locking means (55) are urged into their retracted position preventing the actuating means (250) from remaining stably in the on position.

2. Control device according to Claim 1, **characterized in that** the retractable locking means (55) are configured in such a way that when a coupling (75) is connected to the control device in the orifice, a connection tell-tale (54) transmits a force to the locking means (55) so as to maintain the latter in an active position that locks the actuating means (250) in the on position.

3. Control device according to Claim 2, **characterized in that** it comprises intermediate means (54, 542) that transmit the maintaining force to the locking means (55); the intermediate transmission means (54, 542) comprising a moving member (54) that has a first end capable of collaborating in abutment with a coupling (75) in the orifice (105) and a second end (542) capable of collaborating in abutment with the retractable locking means (55).

4. Control device according to Claim 2 or 3, **characterized in that** when a coupling (75) is disconnected and extracted from the orifice, the maintaining force on the locking means (55) is automatically removed, the locking means (55) being retracted in order to switch the actuating means (250) into the off position.

5. Control device according to any one of the preceding claims, **characterized in that** the actuating means (250) comprise a translationally mobile switch.

6. Control device according to any one of the preceding claims, **characterized in that** it comprises return means (412) urging the locking means (55) toward the retracted position.

7. Control device according to Claim 3, **characterized in that** it comprises a shut-off element (54) capable of being moved between positions in which it opens and closes the orifice (105) for the coupling, and **in that** the shut-off element (54) constitutes the moving member of the intermediate means (54, 542) for transmitting the maintaining force to the locking means.

8. Control device according to Claim 7, **characterized in that** the shut-off element (54) comprises an attachment portion, when the shut-off element (54) is in the opening position, the attachment portion projecting into the orifice so as to allow it to collaborate for the purposes of attachment with a mating portion belonging to a coupling (75).

9. Control device according to any one of the preceding claims, **characterized in that** it comprises closure means (350) intended to make the member (17) move into its rest position.

10. Control device according to any one of Claims 2 to 4, **characterized in that** the locking means (55) comprise an elastic attachment portion (51), the elastic attachment portion (51) and the actuating means (250) having mating shapes so that when the locking means (55) are in the active locking position the movement of the actuating means (250) toward the on position causes the elastic portion (51) to become attached to the actuating means (250).

11. Control device according to Claims 9 and 10, **characterized in that** the closure means (350) are able to move between an inactive position and an active position, in the active position, the closure means (350) collaborating with the actuating means (250) in order to move and/or to deform the elastic attachment portion (51) and thus release the locking of the actuating means (250).

12. Assembly made up of a pressurized-fluid tank and a control device, the tank (1) comprising a casing (13) delimiting a storage volume and provided with an orifice allowing communication with the inside of the tank, a filling and distribution head (2) positioned at the orifice, an isolating member (8) such as an isolating valve, a connection interface (3) intended to collaborate removably with a control device, **characterized in that** the control device is a control device according to any one of the preceding claims.

## Patentansprüche

1. Vorrichtung zum Steuern des Füllens und/oder Entnehmens von Fluid insbesondere in einen bzw. aus einem mit Druck beaufschlagten Fluidvorratsbehälter, der einen Körper mit einem Anschlussende (516), das mit Kopplungsmitteln versehen ist, die dazu bestimmt sind, mit komplementären Kopplungsmitteln insbesondere einer Anschlussschnittstelle eines Vorratsbehälters zusammenzuwirken, ein Organ (17) zum Öffnen eines relativ zu dem Körper beweglichen Ventils, Betätigungsmittel (250), die das Öffnungsorgan (17) wahlweise verlagern können, wobei die Betätigungsmittel (250) zwischen einer Betriebsposition und einer Ruheposition, die einer Arbeitsposition bzw. einer Ruheposition des Öffnungsorgans (17) entsprechen, beweglich sind, und eine Öffnung (105), die dazu vorgesehen ist, einen abnehmbaren Ausgangs- oder Eingangsverbinder (75) aufzunehmen, um die Verteilung von Fluid zu gewährleisten, umfasst, **dadurch gekennzeichnet, dass** sie einziehbare Mittel (55) zum Verriegeln der Betätigungsmittel (250) in der Betriebsposition umfasst, wobei die einziehbaren Verriegelungsmittel (55) dazu ausgelegt sind, mit der Öffnung (105) zusammenzuwirken, derart, dass dann, wenn ein Verbinder (75) nicht mit der Steuervorrichtung in der Öffnung verbunden ist, die Verriegelungsmittel (55) in ihre eingezogene Position gedrängt werden und das stabile Halten der Betätigungsmittel (250) in der Betriebsposition verhindern.

2. Steuervorrichtung nach Anspruch 1, **dadurch gekennzeichnet, dass** die einziehbaren Verriegelungsmittel (55) dazu ausgelegt sind, dass dann, wenn ein Verbinder (75) mit der Steuervorrichtung in der Öffnung verbunden ist, ein Verbindungsanzeiger (54) an die Verriegelungsmittel (55) eine Kraft überträgt, derart, dass diese Letzteren in der aktiven Position zum Verriegeln der Betätigungsmittel (250) in der Betriebsposition gehalten werden.

3. Steuervorrichtung nach Anspruch 2, **dadurch gekennzeichnet, dass** sie Zwischenmittel (54, 542) umfasst, die die Übertragung der Haltekraft an die Verriegelungsmittel (55) gewährleisten; wobei die Übertragungszwischenmittel (54, 542) ein bewegliches Organ (54) umfassen, das ein erstes Ende, das mit einem Verbinder (75) in der Öffnung (105) anliegend zusammenwirken kann, und ein zweites Ende (542), das mit den einziehbaren Verriegelungsmitteln (55) anliegend zusammenwirken kann, besitzt.

4. Steuervorrichtung nach Anspruch 2 oder 3, **dadurch gekennzeichnet, dass** dann, wenn ein Verbinder (75) von der Öffnung getrennt und aus ihr entnommen wird, die Haltekraft auf die Verriegelungsmittel (55) automatisch beseitigt wird, wobei die Verriegelungsmittel (55) eingezogen werden, um die Betätigungsmittel (250) in die Ruheposition zu schalten.

5. Steuervorrichtung nach einem der vorhergehenden Ansprüche, **dadurch gekennzeichnet, dass** die Betätigungsmittel (250) einen translatorisch beweglichen Unterbrecher umfassen.

6. Steuervorrichtung nach einem der vorhergehenden Ansprüche, **dadurch gekennzeichnet, dass** sie Rückstellmittel (412) umfasst, die die Verriegelungsmittel (55) in die eingezogene Position drängen.

7. Steuervorrichtung nach Anspruch 3, **dadurch gekennzeichnet, dass** sie einen Verschluss (54) umfasst, der zwischen der geöffneten und der geschlossenen Position der Öffnung (105) für den Verbinder verlagert werden kann und dass der Verschluss (54) das bewegliche Organ der Zwischenmittel (54, 542) für die Übertragung der Haltekraft an die Verriegelungsmittel bildet.

8. Steuervorrichtung nach Anspruch 7, **dadurch gekennzeichnet, dass** der Verschluss (54) in der geöffneten Position des Verschlusses (54) einen Kopplungsabschnitt aufweist, wobei der Kopplungsabschnitt in die Öffnung in der Weise vorsteht, dass seine koppelnde Zusammenwirkung mit einem konjugierten Abschnitt eines Verbinders (75) möglich ist.

9. Steuervorrichtung nach einem der vorhergehenden Ansprüche, **dadurch gekennzeichnet, dass** sie Schließmittel (350) umfasst, die dazu bestimmt sind, die Verlagerung des Organs (17) in seine Ruheposition zu steuern.

10. Steuervorrichtung nach einem der Ansprüche 2 bis 4, **dadurch gekennzeichnet, dass** die Verriegelungsmittel (55) einen elastischen Kopplungsabschnitt (51) umfassen, wobei der elastische Kopplungsabschnitt (51) und die Betätigungsmittel (250) konjugierte Formen haben, derart, dass dann, wenn die Verriegelungsmittel (55) in der aktiven Verriegelungsposition sind, die Verlagerung der Betätigungsmittel (250) in die Betriebsposition das Koppeln des elastischen Abschnitts (51) und der Betätigungsmittel (250) hervorruft.

11. Steuervorrichtung nach den Ansprüchen 9 und 10, **dadurch gekennzeichnet, dass** die Schließmittel (350) zwischen einer inaktiven Position und einer aktiven Position beweglich sind, wobei die Schließmittel (350) in der aktiven Position mit den Betätigungsmitteln (250) zusammenwirken, um den elastischen Kopplungsabschnitt (51) zu verlagern und/oder zu Verformen und um so die Verriegelung der Betätigungsmittel (250) aufzuheben.

12. Anordnung aus unter Druck stehendem Vorratsbehälter und Steuervorrichtung, wobei der Vorratsbehälter (1) eine Hülle (13), die ein Speichervolumen begrenzt und mit einer Öffnung versehen ist, die die Kommunikation mit dem Innenraum des Vorratsbehälters ermöglicht, einen Kopf (2) zum Befüllen und Verteilen, der auf Höhe der Öffnung angeordnet ist, ein Trennorgan (8) wie etwa ein Ventil, und eine Anschlussschnittstelle (3), die dazu bestimmt ist, mit einer Steuervorrichtung lösbar zusammenzuwirken, umfasst, **dadurch gekennzeichnet, dass** die Steuervorrichtung wie in einem der vorhergehenden Ansprüche definiert beschaffen ist.
